**Europäisches Patentamt**

**European Patent Office**

**Office européen des brevets**

(19)

(11) Veröffentlichungsnummer : **0 178 433**
**B1**

(12) **EUROPÄISCHE PATENTSCHRIFT**

(45) Veröffentlichungstag der Patentschrift :
09.11.88

(21) Anmeldenummer : 85110779.7

(22) Anmeldetag : 28.08.85

(51) Int. Cl.⁴ : **B 23 B 31/04**

(54) **Bohrfutter, insbesondere Schlagbohrfutter.**

(30) Priorität : 18.10.84 DE 3438145

(43) Veröffentlichungstag der Anmeldung :
23.04.86 Patentblatt 86/17

(45) Bekanntmachung des Hinweises auf die Patenterteilung : 09.11.88 Patentblatt 88/45

(84) Benannte Vertragsstaaten :
CH FR GB IT LI

(56) Entgegenhaltungen :
DE-A- 3 125 455
DE-A- 3 315 661
DE-A- 3 333 856
DE-U- 8 327 665
FR-A- 2 508 359
GB-A- 2 140 733

(73) Patentinhaber : Röhm, Günter Horst
Heinrich-Röhm-Strasse 50
D-7927 Sontheim (DE)

(72) Erfinder : Röhm, Günter Horst
Heinrich-Röhm-Strasse 50
D-7927 Sontheim (DE)

(74) Vertreter : Fay, Hermann, Dipl.-Phys. Dr. et al
Ensingerstrasse 21 Postfach 1767
D-7900 Ulm (Donau) (DE)

EP 0 178 433 B1

## Beschreibung

Die Erfindung betrifft ein Bohrfutter, insbesondere Schlagbohrfutter, mit einem eine Werkzeugaufnahme für das Bohrwerkzeug bildenden Futterkörper, einem daran drehbar und axial unverschiebbar geführten Spannring, ferner mit durch den Spannring verstellbaren, das Werkzeug in der Werkzeugaufnahme haltenden Spannbacken, und mit einem am Futerkörper axial verschiebbaren und gegen Verdrehungen gesicherten Stellring, der bei Verschiebung gegen den Spannring diesen verriegelt.

Bohrfutter dieser Art sind aus DE-U-8 327 665 bekannt und besitzen den Vorteil, daß sich die Spannbacken bei verriegeltem Spannring nicht verstellen können, das Bohrfutter sich also auch unter den harten Beanspruchungen eines Schlagbohrbetriebes nicht selbsttätig lockern oder weiter festziehen kann. Allerdings ist es erforderlich, vor einer Betätigung des Spannringes den Stellring aus dem Verriegelungseingriff am Spannring zu lösen.

In DE-A-3 315 661 sind Bohrfutter beschrieben, bei welchen der Schaft des Bohrwerkzeuges zwischen den Spannbacken nicht fest eingeklemmt, sondern axial beweglich geführt ist, damit von der Bohrmaschine ausgehende Schlagwirkungen ohne Dämpfung durch das Bohrfutter unmittelbar am Bohrwerkzeug wirksam werden können. Um bei einer solchen losen Einspannung die drehende Mitnahme des Bohrwerkzeuges im Bohrfutter dennoch sicher zu stellen, können ein oder mehrere im Futterkörper beweglich angeordnete Mitnehmer vorgesehen sein, die in die Werkzeugaufnahme hinein verstellbar sind und dabei drehschlüssig in am Werkzeugschaft vorgesehene Längsnuten greifen. Derartige Mitnehmer benötigen eigene Betätigungseinrichtungen, bei denen ebenfalls verhindert werden muß, daß sich der oder die Mitnehmer während des Bohrbetriebes selbsttätig aus ihrem Eingriff am Werkzeugschaft lösen. Die Spannbacken und Mitnehmer mit ihren jeweiligen Betätigungs- und Verriegelungsmöglichkeiten nebeneinander im Bohrfutter vorzusehen, führt daher bei den vorbeschriebenen Ausführunsformen zu konstruktiv aufwendigen Bauformen, die darüber hinaus umständlich zu handhaben sind, weil die Spannbacken, der ihnen zugeordnete Stellring, ferner der bzw. die Mitnehmer, die zu ihnen gehörende Betätigungseinrichtung und die allen zugeordneten Verriegelungseinrichtungen jeweils unabhängig voneinander betätigt werden müssen.

Aus DE-A-3 125 455 ist ein Werkzeughalter für Bohr- und Schlagbohrgeräte bekannt, bei dem das Werkzeug unmittelbar in einer Werkzeugaufnahme eines dazu als Führungshülse ausgebildeten Futterkörpers geführt ist, Spannbacken also nicht vorhanden sind. Im Futterkörper sind als Mitnehmer dienende bewegliche Verriegelungskörper angeordnet und von der Seite her in die Werkzeugaufnahme mittels einer Griffhülse verstellbar, die am Futterkörper axial verschiebbar geführt und in Verschiebungsrichtung verlaufende Stellkurven aufweist, die bei Verschiebung der Griffhülse die Verriegelungskörper verstellen und je nach Stellung der Griffhülse die Verriegelungskörper wahlweise im oder außer Eingriff am Werkzeugschaft halten. Dieser Werkzeughalter setzt im Ergebnis die Verwendung von Bohrwerkzeugen stets desselben Schaftdurchmessers voraus, da nur dann das Werkzeug in der Werkzeugaufnahme geführt ist. Der radiale Verstellhub der Verriegelungsglieder im Futterkörper ist daher immer gleich groß und dementsprechend auch der zum Ein- und Auskuppeln der Verriegelungsglieder erforderliche axiale Stellhub der Griffhülse.

Der Erfindung liegt die Aufgabe zugrunde, ein Bohrfutter der eingangs genannten Art so auszubilden, daß es auch in Verbindung mit die drehschlüssige Mitnahme des Bohrwerkzeuges sichernden Mitnehmern einen konstruktiv einfachen und betriebssicheren Aufbau besitzt und zum Einspannen und Lösen des Bohrwerkzeuges leicht und einfach zu handhaben ist.

Diese Aufgabe wird nach der Erfindung dadurch gelöst, daß im Futterkörper mindestens ein beweglich angeordneter und von der Seite her in die Werkzeugaufnahme verstellbarer Mitnehmer vorgesehen ist, zu dessen Betätigung der Stellring eine in Verschiebungsrichtung verlaufende Stellkurve aufweist, die bei Verschiebung des Stellrings gegen den Spannring den Mitnehmer in eine in die Werkzeugaufnahme vorstehende Stellung bewegt, und daß auf dem gesamten Stellhub des Mitnehmers in der Werkzeugaufnahme zwischen deren Mitte und Wand der Verriegelungseingriff des Stellrings am Spannring erhalten bleibt.

In einem solchen Bohfutter können je nach Backeneinstellung Werkzeuge mit dünnem oder dickem Werkzeugschaft betrieben werden, und daher ist in Abhängigkeit vom Durchmesser des Werkzeugschaftes der radiale Verstellhub des Mitnehmers im Futterkörper verschieden, nämlich um so größer, je dünner der Werkzeugschaft ist, weil anders der Mitnehmer nicht am Werkzeugschaft zum Eingriff kommen könnte. Gleiches gilt sinngemäß für den axialen Verstellhub des den Mitnehmer betätigenden Stellrings. Über diesen gesamten Verstellhub hinweg steht der Stellring im Eingriff am Spannring, damit der Stellring seine den Spannring sperrende Funktion erfüllt. Im Ergebnis ist es möglich, sowohl die Betätigung des Mitnehmers oder der Mitnehmer als auch die Verriegelungsfunktion für den Spannring mit ein und demselben Teil, nämlich allein mit dem Stellring zu bewirken, so daß die Verstellung der Mitnehmer und die Ver- bzw. Entriegelung des Spannringes nur eines einzigen Handgriffes bedarf, nämlich eines Verschiebens des Stellringes. Da im übrigen der Stellring über die Stellkurve bzw. die Stellkurven den oder die Mitnehmer in der jeweiligen Eingriffsstellung am Werkzeug festhält, sind eigene Verriegelungsmechanismen für den bzw. die Mitnehmer entbehrlich.

Zweckmäßig steht der Stellring unter der Kraft einer ihn in Richtung gegen den Spannring bewegenden Stellfeder, die den Verriegelungseingriff des Stellrings am Spannring aufrecht erhält und den bzw. die Mitnehmer über die Stellkurven im Eingriff am Werkzeugschaft hält. Die Ausbildung der Stellkurve hängt im allgemeinen davon ab, wie der bzw. die Mitnehmer ausgebildet und im Futterkörper geführt oder gelagert sind, ob sie also Rotations- oder Translationsschieber sind und zu ihrer Stellbewegung eines Rotationsoder Translationsantriebes benötigen. Vorzugsweise verläuft die Stellkurve in Richtung zum Spannring hin mit zunehmendem Abstand von der Futterachse und ist der Mitnehmer radial verschiebbar im Futterkörper geführt. Im einzelnen kann eine den Mitnehmer in Anlage an der Stellkurve haltende Rückstellfeder vorgesehen sein, die bei beispielsweise drei in Umfangsrichtung des Bohrfutters mit gleichem Winkelabstand voneinander angeordneten Mitnehmern als alle Mitnehmer durchgreifende, zur Futterachse koaxiale Ringfeder ausgebildet sein kann. Die Rückstellfeder bietet die Möglichkeit, zwischen dem Mitnehmer bzw. den Mitnehmern und ihrer jeweiligen Stellkurve eine nur druckschlüssige und damit besonders einfache Verbindung vorzusehen. Es besteht aber auch die Möglichkeit, diese Verbindung unter Verzicht auf die Rückstellfeder nicht nur druck, sondern auch zugübertragend auszubilden, wozu eine besonders geeignete Ausführungsform dadurch gekennzeichnet ist, daß die Stellkurve als hinterschnittene Nut ausgebildet ist und der Mitnehmer mit einem entsprechend hinterschnittenen Führungskopf in die Nut eingreift.

Den Verriegelungseingriff des Stellrings am Spannring auf dem gesamten Stellhub des Mitnehmers zu erhalten, kann auf einfache Weise dadurch erfüllt werden, daß der Stellring und der Spannring sich im Verriegelungseingriff gegenseitig in einer zylindrischen Mantelfläche überlappen, daß in der Mantelfläche sowohl am Stellring wie am Spannring eine Verzahnung mit sich axial über die Breite der Mantelfläche erstreckenden Zähnen vorgesehen ist, und daß die Breite der Mantelfläche gleich dem Verschiebungsweg des Stellrings ist, der der Verstellbewegung des Mitnehmers zwischen der Mitte und der Wand der Werkzeugaufnahme entspricht. Es besteht aber auch die Möglichkeit, daß der Stellring aus zwei axial gegeneinander verstellbaren Hülsen gebildet ist, von welchen die eine Hülse die Stellkurve und die andere Hülse an ihrem dem Spannring zugewandten Ende eine Stirnverzahnung aufweist, die mit einem Zahnkranz am Spannring zum Eingriff kommt, daß für jede Hülse eine eigene Stellfeder vorgesehen ist, und daß zwischen beiden Hülsen ein Anschlag vorgesehen ist, über den die Hülsen axial einander mitnehmen, sobald die Mitnehmer in den Futterkörper zurückgetreten sind, bzw. der Spannring zum Verdrehen frei gegeben ist. So kann die Hülse mit der Stirnverzahnung bei ihrer Verschiebung aus dem Verriegelungseingriff die Hülse mit der Stellkurve gegen die Kraft ihrer Stellfeder mitnehmen, sobald die erste Hülse außer Eingriff am Spannring steht. Zweckmäßig sind die beiden Hülsen teleskopisch aneinander geführt, wobei die innere Hülse die Stellkurve, die äußere Hülse die Stirnverzahnung aufweist.

Schließlich besteht auch die Möglichkeit, bei einem Bohrfutter mit durch einen Spannschlüssel betätigbarem Spannring das Ansetzen des Spannschlüssels am Bohrfutter zu verhindern, solange sich der Stellring im Verriegelungseingriff am Spannring befindet. Dies wird vorzugsweise dadurch erreicht, daß bei einem Spannschlüssel mit einem Führungszapfen und einem Zahnritzel, wobei der Führungszapfen in eine Zapfenaufnahme am Bohrfutter einsteckbar ist und das Zahnritzel bei am Bohrfutter angestecktem Spannschlüssel in einen Zahnkranz des Spannringes greift, der Stellring in seiner den Spannring verriegelnden Stellung das Bohrfutter außen im Bereich der Zapfenaufnahme bzw. des Spannrings und seines Zahnkranzes soweit abdeckt, daß der Spannschlüssel nicht mit dem Führungszapfen in die Zapfenaufnahme eingesteckt und/ oder das Zahnritzel nicht am Zahnkranz zum Eingriff gebracht werden kann. Zweckmäßig ist dabei die Zapfenaufnahme am Futterkörper axial zwischen dem Zahnkranz und dem Stellring vorgesehen.

Im folgenden wird die Erfindung an in der Zeichnung dargestellten Ausführungsbeispielen näher erläutert ; es zeigen :

Fig. 1 ein Bohrfutter nach der Erfindung im Axialschnitt,

Fig. 2 eine andere Ausführungsform eines Bohrfutters nach der Erfindung, ebenfalls im Axialschnitt,

Fig. 3 den Schnitt in Richtung III-III in Fig. 2,

Fig. 4 einen Ausschnitt aus Fig. 2 bei einer anders stehender Stellhülse,

Fig. 5 eine weitere Ausführungsform des erfindungsgemäßen Bohrfutters im Axialschnitt,

Fig. 6 den Schnitt VI-VI in Fig. 5,

Fig. 7 den Schnitt VII-VII in Fig. 5, und

Fig. 8 einen Axialschnitt durch eine nochmals andere Ausführungsform des Bohrfutters.

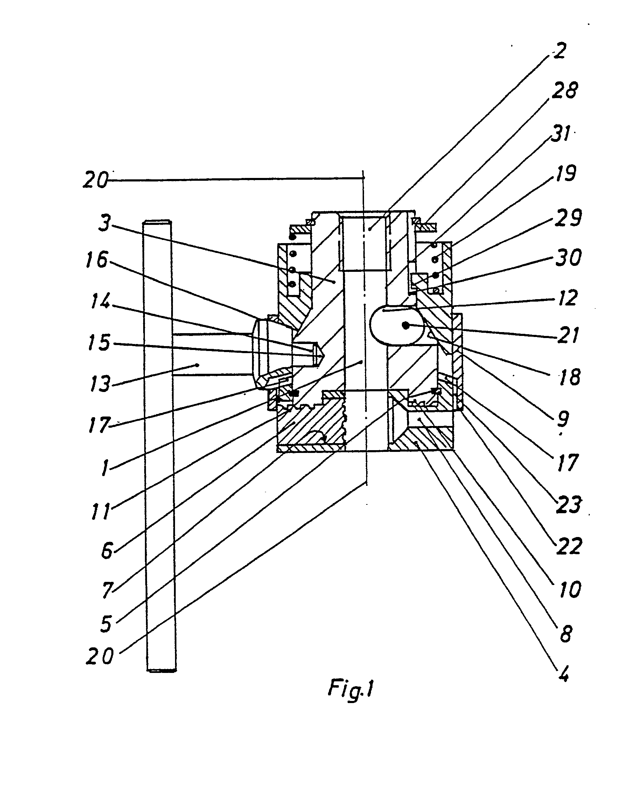

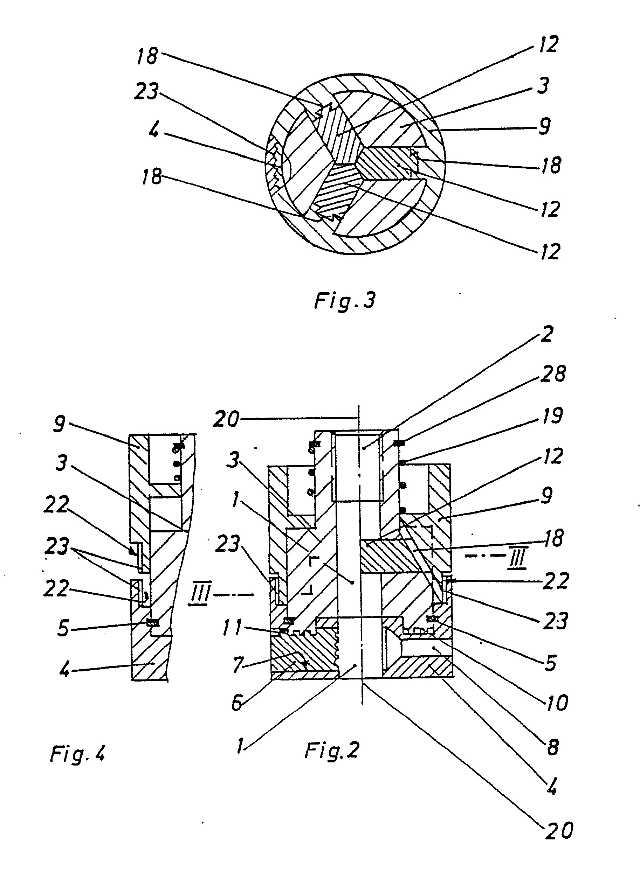

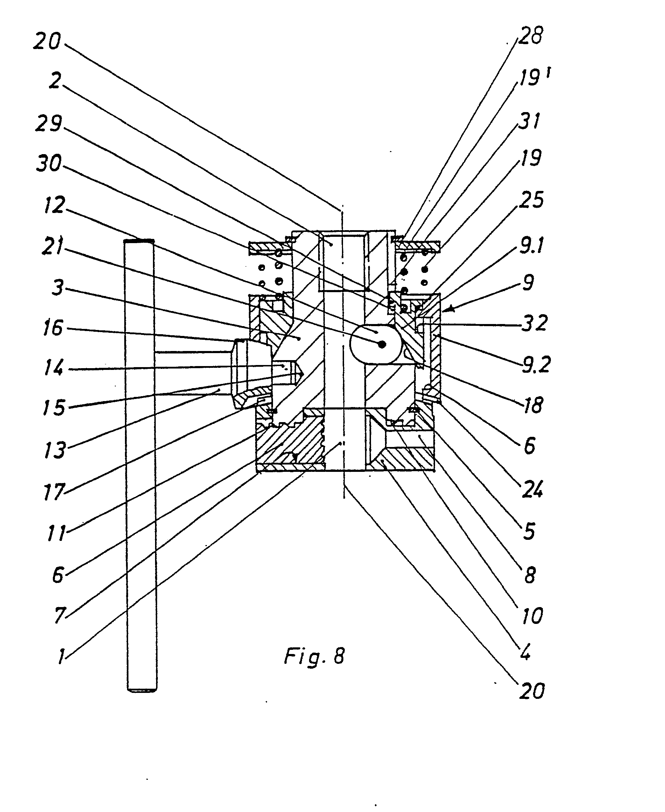

Die in der Zeichnung dargestellten Bohrfutter sind Schlagbohrfutter und besitzen einen einerseits mit einer Werkzeugaufnahme 1 für den nicht dargestellten Bohrer, andererseits mit einer Gewindeaufnahme 2 zum Anschluß an die ebenfalls nicht dargestellte Bohrspindel einer Bohrmaschine versehenen Futterkörper 3, der zwischen der Gewindeaufnahme 2 und der Werkzeugaufnahme 1 durchbrochen ist, so daß beim Schlagbohren, beispielsweise mit Bohrhämmern, die Schlagwirkung von der Bohrspindel unmittelbar auf das Ende des im Bohrfutter gehaltenen Bohrers übertragen werden kann. Am Futterkörper 3 ist ein Spannring 4 drehbar und mittels eines bei 5 angedeuteten Federrings axial unverschiebbar geführt. Im Spannring 4 sind außerdem die Spannbacken 6 radial verstellbar geführt, wozu der Spannring 4. Radialbohrungen 7 aufweist, die zur Werkzeugaufnahme 1 hin offen sind und die als zylindrische Bolzen ausgebildete Spannbacken 6 aufnehmen. Der Futterkörper 3 trägt an seiner den Spannbacken 6 zugewandten Stirnseite ein ebenes Spiralgewinde 10, in das die Spannbacken 6 mit entsprechenden ebenen spiraligen Gewindegangabschnitten 11 eingreifen, die auf der dem Futterkörper 3 zugewandten Spannbackenseite vorgesehen sind. In der Zeichnung ist die jeweils radial äußerste Stellung der Spannbacken 6 gezeigt. Die Verdrehung des Spannringes 4 und damit je nach Drehsinn die einwärts oder auswärts gerichtete Radialverstellung der Spannbacken 6 erfolgt in den Fig. 1 und 8 mit Hilfe eines am Spannfutter ansetzbaren Spannschlüssels 13, der mit einem Führungszapfen 14 in eine im Futterkörper 3 vorgesehene Zapfenaufnahme 15 eingreift und ein Zahnritzel 16 aufweist, das bei am Bohrfutter angesetztem Spannschlüssel in die Stirnverzahnung eines am Spannring 4 ausgebildeten Zahnkranzes 17 eingreift. Im Spannring 4 sind zwischen den die Spannbacken 6 aufnehmenden Radialbohrungen 7 ebenfalls radial verlaufende Reinigungsbohrungen 8 vorgesehen, durch die hindurch in die Werkzeugaufnahme 1 eintretender Bohrschmutz nach außen abgeschleudert werden kann. Weiter ist ein am Futterkörper 3 axial verschiebbar und gegen Verdrehungen gesicherter Stellring 9 vorgesehen, der bei Verschiebung gegen den Spannring 4 diesen verriegelt. Im Futterkörper 3 sind weiter drei in Umfangsrichtung mit gleichen Winkelabständen voneinander angeordnete Mitnehmer 12 vorgesehen, von welchen in den Axialschnitten der Zeichnung jeweils nur einer sichtbar ist. Zur Betätigung dieser Mitnehmer 12 besitzt der Stellring 9 in seiner Verschiebungsrichtung verlaufende Stellkurven 18, die bei Verschiebung des Stellrings 9 gegen den Spannring 4 die Mitnehmer 12 in eine in die Werkzeugaufnahme 1 vorstehende Stellung bewegen, wobei mindestens einer der Mitnehmer 12 drehschlüssig in eine Längsnut im Werkzeugschaft greift. Der Stellring 9 steht unter der Kraft einer ihn in Richtung gegen den Spannring 4 bewegenden Stellfeder 19, 19'. Die Mitnehmer 12 sind radial verschiebbar im Futterköper 3 geführt und ihre Stellkurven 18 verlaufen in Richtung zum Spannring 4 hin mit zunehmenden Abstand von der Futterachse 20. Wird daher der Stellring 9 durch die Kraft der Stellfeder 19, 19' axial gegen den Spannring 4 in den Verriegelungseingriff gedrückt, verstellen sich die Mitnehmer 12 an den Stellkurven 18 radial einwärts in die Werkzeugaufnahme 1 hinein. Die radiale Auswärtsbewegung der Mitnehmer 12 wird in den Ausführungsbeispielen nach den Fig. 1 und 8 durch eine die Mitnehmer 12 in Anlage an der Stellkurve 18 haltende Rückstellfeder 21 bewirkt, die als eine alle Mitnehmer 12 durchgreifende, zur Futterachse 20 koaxiale Ringfeder ausgebildet ist. In diesem Fall genügt zwischen den Mitnehmern 12 und dem Stellring 9 eine einfache druckübertragende Verbindung. Die Stellkurven 18 können daher in besonders einfacher Weise als eine in Umfangsrichtung des Stellringes 9 umlaufende Kegelfläche ausgebildet sein. In den Ausführungsbeispielen nach den Fig. 2 bis 7 sind dagegen die Stellkurven 18 jeweils als hinterschnittene Nut mit einem Schwalbenschwanzprofil ausgebildet. Die Mitnehmer 12 greifen mit einem entsprechend hinterschnittenen Führungskopf von ebenfalls schwalbenschwanzförmigem Profil in die Nuten, so daß zwischen den Mitnehmern 12 und dem Stellring 9 eine radial sowohl Druck als auch Zug übertragende Verbindung besteht. Auf eine Rückstellfeder für die Mitnehmer 12 kann dann verzichtet werden.

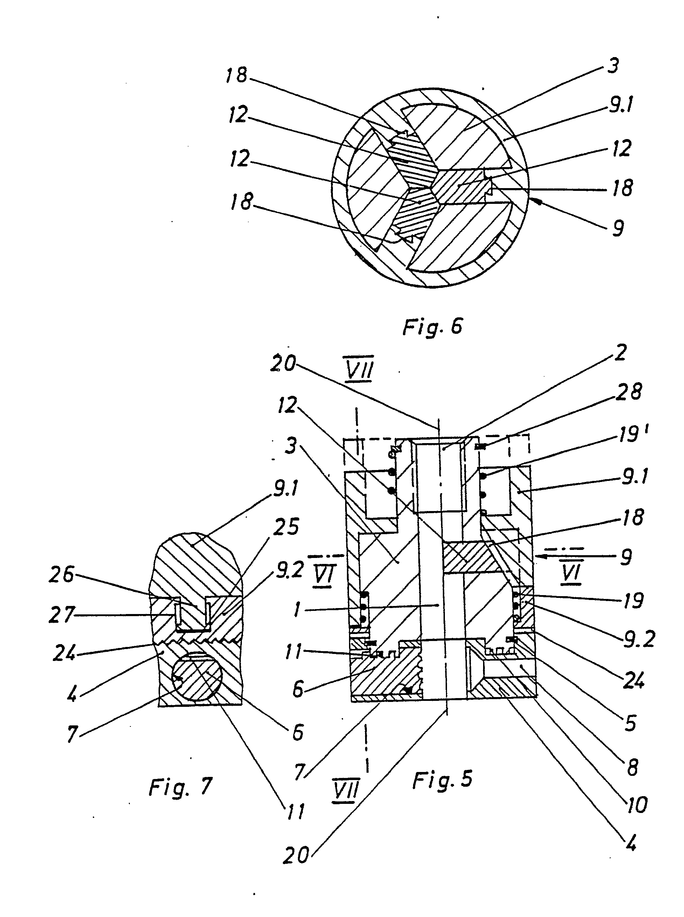

In allen Ausführungsbeispielen wird der Verriegelungseingriff des Stellringes 9 am Spannring 4 über den gesamten Stellhub des Mitnehmers 12 innerhalb der Werkzeugaufnahme 1 zwischen deren Mitte und Wand aufrecht erhalten. Dazu ist in den Ausführungsbeispielen nach den Fig. 1 bis 4 die Anordnung so getroffen, daß der Stellring 9 und der Spannring 4 sich im Verriegelungseingriff gegenseitig in einer zylindrischen Mantelfläche 22 überlappen, daß ferner in der Mantelfläche 22 sowohl am Stellring 9 wie am Spannring 4 eine Verzahnung mit sich axial über die Breite der Mantelfläche 22 erstreckenden Zähnen 23 vorgesehen ist, und daß die Breite der Mantelfläche 22 gleich dem Verschiebungsweg des Stellrings 9 ist, der für die Verstellbewegung des Mitnehmers 12 zwischen der Mitte und der Wand der Werkzeugaufnahme 1 erforderlich ist. Wird daher der Stellring 9 in den Fig. 1 bis 4 aus der Verriegelungsstellung axial nach oben in die in Fig. 4 gezeigte, den Spannring 4 zum Verdrehen freigebende Stellung verschoben, bleibt der Verriegelungseingriff zwischen dem Stellring 9 und dem Spannring 4 zunächst erhalten, bis sich die Mitnehmer 12 aus der Werkzeugaufnahme 1 in den Futterkörper 3 zurückverstellt haben. Im Ergebnis kommt der Verriegelungseingriff zwischen dem Stellring 9 und dem Spannring 4 unabhängig davon zustande, wie weit sich die Mitnehmer 12 in die Werkzeugaufnahme 1 hinein verstellen, wie dick also der Schaft des in der Werkzeugaufnahme 1 gehaltenen Bohrers ist. Das gleiche Ergebnis wird in den Ausführungsbeispielen nach den Fig. 5 bis 8 dadurch erreicht, daß der Stellring 9 aus zwei axial gegeneinander verstellbaren Hülsen 9.1, 9.2 gebildet ist, von welchen die eine Hülse 9.1 die Stellkurve 18 und die andere Hülse 9.2 an ihrem dem Spannring 4 zugewandten Ende eine Stirnverzahnung 24 aufweist, die mit einem Zahnkranz am Spannring 4 zum Eingriff kommt, und daß für jede Hülse 9.1, 9.2 eine eigene Stellfeder 19, 19' und zwischen beiden Hülsen 9.1, 9.2 ein Anschlag 25 vorgesehen ist. Über diesen Anschlag 25 nimmt die Hülse 9.2 in Fig. 8 bei ihrer Verschiebung aus dem Verriegelungseingriff die Hülse 9.1 gegen die Kraft ihrer Stellfeder 19' mit, sobald die erste Hülse 9.2 außer Eingriff am Spannring 4 steht. Im Ausführungsbeispiel nach den Fig. 5 bis 7 wird der Anschlag 25 durch eine an der oberen, die Stellkurve 18 tragenden Hülse 9.1 befindliche Zunge 26 gebildet, die in einer Ausnehmung 27 der unteren, die Stirnverzahnung 24 tragenden Hülse 9.2 hineinragt, wobei die Zunge 26 und die Ausnehmung 27 jeweils so hinterschnitten sind, daß der Anschlag 25 zustande kommt, wenn die beiden Hülsen 9.1, 9.2 axial auseinander bewegt werden. Wird also die obere Hülse 9.1 von Hand gegen die Kraft ihrer Stellfeder 19' axial nach oben bewegt, um die Mitnehmer 12 aus der Werkzeugaufnahme 1 zurückzuziehen, so wird die untere Hülse 9.2 durch ihre Stellfeder 19 solange noch im Verriegelungseingriff am Spannring 4 gehalten, bis die Mitnehmer 12 aus der Werkzeugaufnahme 1 zurückgezogen sind.

Im Ausführungsbeispiel nach Fig. 8 sind die beiden Hülsen 9.1, 9.2 teleskopisch aneinander geführt. Die innere Hülse 9.1 bildet die Stellkurven 18, die äußere Hülse 9.2 trägt die Stirnverzahnung 24. Die Stellfedern 19, 19' sind jeweils gegen ein am Futterkörper 3 axial festes Widerlager 28 abgestützt. Im Ausführungsbeispiel nach den Fig. 1 und 8 besteht die Möglichkeit, den Stellring 9 bzw. seine beiden Hülsen 9.1, 9.2 in der jeweils axial zurück, d. h. in den Fig. 1 und 8 nach oben bewegten Stellung festzusetzen. Dazu greift der Stellring 9 bzw. die innere Hülse 9.1 mit einer Nase 29 in eine Axialnut 30 des Futterkörpers 3, wodurch zugleich der Stellring 9 bzw. die Hülse 9.1 gegen Verdrehung gesichert ist. Die Axialnut verbreitert sich in einer Schulter 31, auf welcher die Nase 29 abgesetzt werden kann, wenn der Stellring 9 bzw. die Hülse 9.1 mit der Nase 29 über die Schulter 31 angehoben ist und die Nase 29 durch geringfügiges Verdrehen des Stellrings 9 bzw. der Hülse 9.1 über die Schulter 31 gelangt. Die innere Hülse 9.1 hält dann in Fig. 8 über einen Anschlag 32 die äußere Hülse 9.2 außer Eingriff am Spannring 4.

Handelt es sich wie in den Fig. 1 und 8 um ein Bohrfutter mit Betätigung des Spannrings durch einen Spannschlüssel 13, so kann der Stellring 9 in seiner den Spannring 4 verriegelnden Stellung das Bohrfutter außen im Bereich der Zapfenaufnahme 15 bzw. des Spannrings 4 und seines Zahnkranzes 17 so weit abdecken, daß der Spannschlüssel 13 mit dem Führungszapfen 14 nicht in die Zapfenaufnahme 15 eingesteckt und/oder das Zahnritzel 16 nicht am Zahnkranz 17 zum Eingriff gebracht werden kann. Dazu ist die Zapfenaufnahme 15 am Futterkörper 3 axial zwischen dem Zahnkranz 17 und dem Stellring 9 vorgesehen. Der Spannschlüssel 13 kann am Futterkörper 3 erst dann angesetzt werden, wenn der Stellring 9 axial soweit zurückgezogen ist, daß er den Spannring 4 zur Verdrehung freigegeben hat. Auf diese Weise wird jeder Versuch verhindert, den noch im Verriegelungseingriff mit dem Stellring 9 stehenden Spannring 4 mittels des Spannschlüssels 13 zu verdrehen, was zu Zerstörungen an den miteinander im Eingriff stehenden Verzahnungen 17, 24 oder an der Führung des Stellrings 9 am Futterkörper 3 führen könnte. Dabei kann (Fig. 8) am Spannring 4 derselbe Zahnkranz 17 sowohl zum Eingriff der Stirnverzahnung 24 des Stellrings 9 als auch des Zahnritzels 16 des Spannschlüssels 14 dienen.

**Patentansprüche**

1. Bohrfutter, insbesondere Schlagbohrfutter, mit einem eine Werkzeugaufnahme (1) für das Bohrwerkzeug bildenden Futterkörper (3), einem daran drehbar und axial unverschiebbar geführten Spannring (4), ferner mit durch den Spannring (4) verstellbaren, das Werkzeug in der Werkzeugaufnahme (1) haltenden Spannbacken (6), und mit einem am Futterkörper (3) axial verschiebbaren und gegen Verdrehungen gesicherten Stellring (9), der bei Verschiebung gegen den Spannring (4) diesen verriegelt, dadurch gekennzeichnet, daß im Futterkörper (3) mindestens ein beweglich angeordneter und von der Seite her in die Werkzeugaufnahme (1) verstellbarer Mitnehmer (12) vorgesehen ist, zu dessen Betätigung der Stellring (9) eine in Verschiebungsrichtung verlaufende Stellkurve (18) aufweist, die bei Verschiebung des Stellrings (9) gegen den Spannring (4) den Mitnehmer (12) in eine in die Werkzeugaufnahme (1) vorstehende Stellung bewegt, und daß auf dem gesamten Stellhub des Mitnehmers (12) in der Werkzeugaufnahme (1) zwischen deren Mitte und Wand der Verriegelungseingriff des Stellrings (9) am Spannring (4) erhalten bleibt.

2. Bohrfutter nach Anspruch 1, dadurch gekennzeichnet, daß der Stellring (9) unter der Kraft einer ihn in Richtung gegen den Spannring (4) bewegenden Stellfeder (19) steht.

3. Bohrfutter nach Anspruch 1 oder 2, dadurch gekennzeichnet, daß die Stellkurve (13) in Richtung zum Spannring (4) hin mit zunehmendem Abstand von der Futterachse (20) verläuft und der Mitnehmer (12) radial verschiebbar im Futterkörper (3) geführt ist.

4. Bohrfutter nach Anspruch 3, dadurch gekennzeichnet, daß eine den Mitnehmer (12) in Anlage an der Stellkurve (18) haltende Rückstellfeder (21) vorgesehen ist.

5. Bohrfutter nach Anspruch 3, dadurch gekennzeichnet, daß die Stellkurve (18) als hinterschnittene Nut ausgebildet ist und der Mitnehmer (12) mit einem entsprechend hinterschnittenen Führungskopf in die Nut greift.

6. Bohrfutter nach einem der Ansprüche 1 bis 5, dadurch gekennzeichnet, daß der Stellring (9) und der Spannring (4) sich im Verriegelungseingriff gegenseitig in einer zylindrischen Mantelfläche (22) überlappen, daß in der Mantelfläche (22) sowohl am Stellring (9) wie am Spannring (4) eine Verzahnung mit sich axial über die Breite der Mantelfläche erstreckenden Zähnen (23) vorgesehen ist, und daß die Breite der Mantelfläche (22) gleich dem Verschiebungsweg des Stellrings (9) ist, der der Verstellbewegung des Mitnehmers (12) zwischen der Mitte und der Wand der Werkzeugaufnahme (1) entspricht.

7. Bohrfutter nach einem der Ansprüche 1 bis 5, dadurch gekennzeichnet, daß der Stellring (9) aus zwei axial gegeneinander verstellbaren Hülsen (9.1, 9.2) gebildet ist, von welchen die eine Hülse (9.1) die Stellkurve (18) und die andere Hülse (9.2) an ihrem dem Spannring (4) zugewandten Ende eine Stirnverzahnung (24) aufweist, die mit einem Zahnkranz (17) am Spannring (4) zum Eingriff kommt, daß für jede Hülse (9.1, 9.2)

eine eigene Stellfeder (19, 19') vorgesehen ist, und daß zwischen beiden Hülsen (9.1, 9.2) ein Anschlag (25) vorgesehen ist, über den die Hülsen (9.1, 9.2) axial einander mitnehmen, sobald die Mitnehmer (12) in den Futterkörper (3) zurückgetreten sind, bzw. der Spannring (4) zum Verdrehen frei gegeben ist.

8. Bohrfutter nach Anspruch 7, dadurch gekennzeichnet, daß die beiden Hülsen (9.1, 9.2) teleskopisch aneinander geführt sind und die innere Hülse (9.1) die Stellkurve (18), die äußere Hülse (9.2) die Stirnverzahnung (24) aufweist.

9. Bohrfutter nach einem der Ansprüche 6 bis 8, dadurch gekennzeichnet, daß bei einem Spannschlüssel (13) mit einem Führungszapfen (14) und einem Zahnritzel (16), wobei der Führungszapfen (14) in eine Zapfenaufnahme (15) am Bohrfutter einsteckbar ist und das Zahnritzel (16) bei am Bohrfutter angestecktem Spannschlüssel (13) in einen Zahnkranz (17) des Spannrings (4) greift, der Stellring (9) in seiner den Spannring (4) verriegelnden Stellung daß Bohrfutter außen im Bereich der Zapfenaufnahme (15) bzw. des Spannrings (4) und seines Zahnkranzes (17) so weit abdeckt, daß der Spannschlüssel (13) mit dem Führungszapfen (14) nicht in die Zapfenaufnahme (15) eingesteckt und/oder des Zahnritzel (16) nicht am Zahnkranz (17) zum Eingriff gebracht werden kann.

10. Bohrfutter nach Anspruch 9, dadurch gekennzeichnet, daß die Zapfenaufnahme (15) am Futterkörper (3) axial zwischen dem Zahnkranz (17) und dem Stellring (9) vorgesehen ist.

### Claims

1. A drilling chuck, in particular a hammer drilling chuck, comprising a chuck body (3) forming a tool receiving means (1) for the drilling tool, a clamping ring (4) which is rotatably and axially nondisplaceably guided on the chuck body, clamping jaws (6) which are displaceable by the clamping ring (4), for holding the tool in the tool receiving means (1), and an adjusting ring (9) which is axially slidable on the chuck body (3) and which is prevented from rotating and which, when it is displaced towards the clamping ring (4), locks same, characterised in that provided in the chuck body (3) is at least one movably arranged entrainment member (12) which can be displaced from the side into the tool receiving means (1) and for the actuation of which the adjusting ring (9) has an adjusting cam (18), the adjusting cam extending in the direction of axial displacement and, upon displacement of the adjusting ring (9) towards the clamping ring (4), moving the entrainment member (12) into a position in which it projects into the tool receiving means (1), and that the locking engagement of the adjusting ring (9) against the clamping ring (4) is maintained over the entire adjusting stroke movement of the entrainment member (12) in the tool receiving means (1) between the middle and the wall thereof.

2. A drilling chuck according to claim 1 characterised in that the adjusting ring (9) is subjected to the force of an adjusting spring (19) for moving it towards the clamping ring (4).

3. A drilling chuck according to claim 1 or claim 2 characterised in that the adjusting cam (18) extends towards the clamping ring (4) with increasing distance from the chuck axis (20) and the entrainment member (12) is radially displaceably guided in the chuck body (3).

4. A drilling chuck according to claim 3 characterised in that there is provided a return spring (21) for holding the entrainment member (12) in a condition of bearing against the adjusting cam (18).

5. A drilling chuck according to claim 3 characterised in that the adjusting cam (18) is in the form of an undercut groove and the entrainment member (12) engages with a correspondingly undercut guide head into the groove.

6. A drilling chuck according to one of claims 1 to 5 characterised in that the adjusting ring (9) and the clamping ring (4) overlap each other in a cylindrical peripheral surface (22) in the condition of locking engagement with each other, that a tooth arrangement with teeth (23) extending axially over the width of the peripheral surface (22) is provided in the peripheral surface (22) both on the adjusting ring (9) and on the clamping ring (4), and that the width of the peripheral surface (22) is equal to the displacement travel of the adjusting ring (9) which corresponds to the adjustment movement of the entrainment member (12) between the middle and the wall of the tool receiving means (1).

7. A drilling chuck according to one of claims 1 to 5 characterised in that the adjusting ring (9) is formed from two sleeves (9.1, 9.2) which are axially displaceable relative to each other and of which the one sleeve (9.1) has the adjusting cam (18) and the other sleeve (9.2), on its end towards the clamping ring (4), has an end face tooth arrangement (24) which comes into engagement with a toothed ring means (17) on the clamping ring (4), that each sleeve (9.1, 9.2) has its own adjusting spring (19, 19') and that provided between the two sleeves (9.1, 9.2) is an abutment (25) by way of which the sleeves (9.1, 9.2) axially entrain each other as soon as the entrainment members (12) have withdrawn into the chuck body (3) or the clamping ring (4) is released for rotary movement.

8. A drilling chuck according to claim 7 characterised in that the two sleeves (9.1, 9.2) are guided telescopically one upon the other and the inner sleeve (9.1) has the adjusting cam (18) and the outer sleeve (9.2) has the end face tooth arrangement (24).

9. A drilling chuck according to one of claims 6 to 8 characterised in that, in the case of a clamping key (13) having a guide pin (14) and a pinion (16), wherein the guide pin (14) can be fitted into a pin receiving means (15) on the chuck body and, when the clamping key (13) is fitted to the drilling chuck, the pinion (16) engages into a toothed ring means (17) on the clamping ring (4), the adjusting ring (9), in its position of locking the clamping ring (4) covers the drilling chuck on the outside thereof in the region of the pin receiving means (15) and the clamping ring (4) and its toothed ring means (17) to such an extent that the clamping key (13) cannot be inserted with its guide pin (14) into the pin receiving means (15) and/or the pinion (16) cannot be brought into engagement with the toothed ring means (17).

10. A drilling chuck according to claim 9 characterised in that the pin receiving means (15) is provided on the chuck body (3) axially between the toothed ring means (17) and the adjusting ring (9).

**Revendications**

1. Mandrin de serrage, en particulier mandrin de serrage pour le perçage à percussion, avec un corps de mandrin (3) constituant un logement de fixation (1) pour l'outil de perçage, une bague de serrage (4) guidée sur ce dernier de façon à pouvoir tourner mais immobile dans le sens axial, des mâchoires de serrage (6) maintenant l'outil dans le logement de fixation de l'outil (1) et réglable par la bague de serrage (4) et une bague de réglage (9) pouvant être déplacée axialement sur le corps de mandrin (3) et bloquée en rotation, qui verrouille la bague de serrage (4) lorsqu'elle est déplacée en direction de celle-ci, caractérisé par le fait que dans le corps de mandrin (3) est prévu au moins un toc d'entraînement (12) mobile pouvant être déplacé par le côté dans le logement de fixation de l'outil (1), pour l'actionnement duquel la bague de réglage (9) comprend une came de réglage (18) qui s'étend dans la direction du déplacement et amène le toc d'entraînement (12) dans une position dépassant vers l'intérieur du logement de fixation de l'outil (1) lorsque la bague de réglage (9) est déplacée en direction de la bague de serrage (4), et que la prise de la bague de réglage (9) sur la bague de serrage (4) est conservée sur toute la course de réglage du toc d'entraînement (12) dans le logement de fixation de l'outil (1), entre le milieu et la paroi de celui-ci.

2. Mandrin de serrage selon la revendication 1, caractérisé par le fait que la bague de réglage (9) est sollicitée par la force d'un ressort de réglage (19) qui la déplace en direction de la bague de serrage (4).

3. Mandrin de serrage selon l'une des revendications 1 ou 2, caractérisé par le fait que la came de réglage (18) s'étend en direction de la bague de serrage (4), à distance croissante de l'axe du mandrin (20), et que le toc d'entraînement (12) est guidé dans le corps de mandrin (3) de manière déplaçable dans le sens radial.

4. Mandrin de serrage selon la revendication 3, caractérisé par le fait qu'il comprend un ressort de rappel (21) qui maintient le toc d'entraînement (12) en contact avec la came de réglage (18).

5. Mandrin de serrage selon la revendication 3, caractérisé par le fait que la came de réglage (18) est réalisée sous la forme d'une rainure contre-dépouillée et que le toc d'entraînement (12) s'engage dans la rainure avec une tête de guidage présentant une contre-dépouille correspondante.

6. Mandrin de serrage selon l'une quelconque des revendications 1 à 5, caractérisé par le fait que, dans la position de verrouillage, la bague de réglage (9) et la bague de serrage (4) se recouvrent mutuellement sur une surface d'enveloppe cylindrique (22), que sur la surface d'enveloppe (22) une denture avec des dents (23) s'étendant axialement sur la largeur de la surface d'enveloppe est prévue sur la bague de réglage (9) aussi bien que sur la bague de serrage (4), et que la largeur de la surface d'enveloppe (22) est égale au parcours de déplacement de la bague de réglage (9) qui correspond au mouvement de déplacement du toc d'entraînement (12) entre le milieu et la paroi du logement de fixation de l'outil (1).

7. Mandrin de serrage selon l'une quelconque des revendications 1 à 5, caractérisé par le fait que la bague de réglage (9) est constituée par deux douilles (9.1, 9.2) déplaçables l'une par rapport à l'autre dans le sens axial, l'une des douilles (9.1) comprenant la came de réglage (18), tandis que l'autre douille (9.2) comporte, à son extrémité dirigée vers la bague de serrage (4), une denture frontale (24) qui s'engrène avec une couronne dentée (17) sur la bague de serrage (4), qu'un ressort de réglage particulier (19, 19') est prévu pour chaque douille (9.1, 9.2), et qu'il est prévu entre les deux douilles (9.1, 9.2) une butée (25) par l'intermédiaire de laquelle les douilles (9.1, 9.2) s'entraînent mutuellement dans le sens axial dès que les tocs d'entraînement (12) se sont retirés dans le corps de mandrin (3) et respectivement dès que la bague de serrage (4) est libérée pour la rotation.

8. Mandrin de serrage selon la revendication 7, caractérisé par le fait que les deux douilles (9.1, 9.2) sont guidées de manière télescopique l'une sur l'autre, la douille intérieure (9.1) présentant la came de réglage (18) et la douille extérieure (9.2), la denture frontale (24).

9. Mandrin de serrage selon l'une quelconque des revendications 6 à 8, caractérisé par le fait que, dans le cas de l'utilisation d'une clé de serrage (13) avec un tourillon de guidage (14) et un pignon (16), le tourillon de guidage (14) pouvant être introduit dans un alésage du tourillon (15) sur le mandrin de serrage et le pignon (16) s'engrenant dans une couronne dentée (17) de la bague de serrage (4) lorsque la clé de serrage (13) est mise en place sur le mandrin de serrage, la bague de réglage (9), dans sa position de verrouillage de la bague de serrage (4), recouvre le mandrin de serrage à l'extérieur, dans la zone de l'alésage du tourillon (15) et respectivement de la bague de serrage (4) et de sa couronne dentée (17) de telle façon que la clé de serrage (13) ne peut être introduite avec le tourillon de guidage (14) dans l'alésage du tourillon (15) et/ou que le pignon (16) ne peut être mis en prise avec la couronne dentée (17).

10. Mandrin de serrage selon la revendication 9, caractérisé par le fait que l'alésage du tourillon (15) est prévu sur le corps de mandrin (3), axialement entre la couronne dentée (17) et la bague de réglage (9).

Fig.1

Fig.3

Fig. 4

Fig.2

Fig. 6

Fig. 7

Fig. 5

Fig. 8